Europäisches Patentamt

European Patent Office

Office européen des brevets

(19)

(11) Veröffentlichungsnummer: **0 099 328**
**B1**

(12) # EUROPÄISCHE PATENTSCHRIFT

(45) Veröffentlichungstag der Patentschrift:
**15.10.86**

(21) Anmeldenummer: **83730070.6**

(22) Anmeldetag: **07.07.83**

(51) Int. Cl.⁴: **B 29 C 39/00, B 41 J 3/04**

(54) Verfahren zum Giessen eines Kunststoffkörpers eines Schreibkopfes für einen Tintenschreiber.

(30) Priorität: **15.07.82 DE 3226746**

(43) Veröffentlichungstag der Anmeldung:
**25.01.84 Patentblatt 84/4**

(45) Bekanntmachung des Hinweises auf die Patenterteilung:
**15.10.86 Patentblatt 86/42**

(84) Benannte Vertragsstaaten:
**CH FR GB IT LI**

(56) Entgegenhaltungen:
**DE-A-2 808 274**

(73) Patentinhaber: **Siemens Aktiengesellschaft Berlin und München, Wittelsbacherplatz 2, D-8000 München 2 (DE)**

(72) Erfinder: **Schimmelpfennig, Hans, Ing. grad., Borkener Weg 15, D-1000 Berlin 27 (DE)**

EP 0 099 328 B1

## Beschreibung

Bei einem Kunststoffkörper in einem Schreibkopf eines Tintenschreibers wirken Mikrokanäle als Düsen, aus denen während des Schreibens die Tinte als Strahl oder in Form von Einzeltröpfchen austritt. Je nach der Art des Druckes, mit dem die Tinte den Düsen zugeführt wird, unterscheidet man beim Tintendruck zwischen dem Hochdruck-, dem Niederdruck- und dem Unterdruckverfahren. Sowohl beim Hochdruckverfahren als, auch beim Niederdruckverfahren wird jeweils nur eine einzige Düse benutzt und der aus der Düse austretende Strahl wird zur Zeichenbildung elektrostatisch oder magnetisch abgelenkt. Beim UnterdruckVerfahren herrscht dagegen Unterdruck in der Düse. Wenn ein Tintentröpfchen ausgestoßen werden soll, wird der Drück in der Düse durch eine Stoßwelle kurzzeitig erhöht. Weil beim Unterdruckverfahren die Stirnfläche der Düsen unbenetzt bleibt, kann man Viele Düsen eng beieinander anordnen, so daß ein Ablenken der Tintentröpfchen überflüssig wird. Es ist z. B. bekannt, die Düsenöffnungen in zwei gegeneinander Versetzten Reihen Von je 6 Öffnungen anzuordnen. Durch unterschiedliche Erregung der einzelnen Düsen können sämtliche Zeichen gestaltet werden.

Sofern - wie bekannt - der Kunststoffkörper mit den Mikrokanälen durch Gießen bzw. Spritzen hergestellt wird, müssen den Mikrokanälen entsprechende Formnadeln derart positioniert werden, daß ihre Spitzen in einer dem Raster der Düsenöffnungen entsprechenden Verteilung angeordnet sind. Dies geschieht beispielsweise durch formschlüssige Zentrierung der Nadel in einer aus Metall bestehenden Teilform. Dabei kann die Lage der Formnadeln nicht beobachtet bzw. gemessen werden, da die Teilform die Stirnfläche der Austrittsöffnungen der Mikrokanäle aufnimmt.

Ferner ist aus der DE-A-28 08 274 ein Verfahren bekannt zum Gießen eines Kunststoffkörpers eines Schreibkopfes für einen Tintenschreiber mit Mikrokanälen, die an einander gegenüberliegenden Begrenzungsflächen des Kunststoffkörpers derart austreten, daß die Austrittsöffnungen in einer ersten Begrenzungsfläche einen geringeren Durchmesser und geringeren Abstand voneinander als in der zweiten Begrenzungsfläche aufweisen, mittels einer Gießform, die an einer offenen Stirnfläche mit einem im Raster der Austrittsöffnungen angeordnete Bohrungen aufweisenden und eine Gießöffnung enthaltenden Anschlußteil zur Bildung der zweiten Begrenzungsfläche abgedeckt wird, wobei durch die Bohrungen des Anschlußteils in die Gießform Formnadeln definiert eingebracht werden und anschließend flüssiger Kunststoff durch die Gießöffnung in die Gießform gegossen wird. Bei diesem bekannten Verfahren kann die Lage der Formnadeln nicht beobachtet oder gemessen werden, wodurch eine Automatisierung der Einbringung der Formnadeln zumindest erschwert ist; insbesondere ist es bei dem bekannten Verfahren erforderlich, die Formnadeln von Hand einzuschrauben.

Der Erfindung liegt die Aufgabe zugrunde, dieses bekannte Verfahren derart auszugestalten, daß die Einformung der Formnadeln automatisierbar ist und zugleich gießtechnisch günstige Bedingungen geschaffen werden.

Dies wird erfindungsgemäß dadurch gelöst, daß eine Gießform Verwendet wird, die eine weitere offene Stirnfläche zur Bildung der ersten Begrenzungsfläche aufweist, und die weitere Stirnfläche mit einer durchsichtigen Folie abgedeckt wird, daß die Formnadeln mittels eines Positionierwerkzeuges durch die Bohrungen in dem Anschlußteil auf die Folie abgesenkt werden, daß die Position der Formnadelspitzen optisch abgetastet wird und die Abtastwerte in einer Auswerte- und Steuereinrichtung zu die Formnadelspitzen jeweils in ihre Sollposition führenden Verfahrbewegungen des Positionierwerkzeuges umgesetzt werden und daß die Formnadelspitzen in der Sollposition an der Folie arretiert werden.

Der besondere Vorteil des erfindungsgemäßen Verfahrens ist darin zu sehen, daß durch den Einsatz einer zweiseitig offenen Gießform in Verbindung mit der Abdeckung einer offenen Stirnfläche durch eine transparente Folie eine Erkennung und Steuerung der Position der Formnadeln auf automatischem Wege möglich wird.

Durch den Einsatz der zweiseitig offenen Gießform ist die Voraussetzung dafür geschaffen, daß die Gießform in vorteilhafter Weise als verlorene Gießform verwendet werden kann, so daß der bisher in der Praxis durchgeführte komplizierte Verdrängungsguß (Anguß, Steiger) in einer speziellen Gießform mit der damit Verbundenen nachträglichen Wartung und Säuberung der Form durch ein einfaches Einfüllen des flüssigen Kunststoffes in die verlorene Gießform ersetzt werden kann. Die dem Einfüllvorgang vorangehenden bzw. nachfolgenden Arbeitsgänge werden an den Einfüllvorgang angepaßt. Beispielsweise kann ein als Kunststoff verwendetes Harz vorevakuiert werden, um die Luft weitestgehend aus dem Kunstharz zu entfernen; nach dem Einfüllvorgang kann der Kunststoffkörper beispielsweise druckgeliert werden, was ebenfalls dem Entfernen von Luft aus der eigentlichen Gießmasse dient. Der Herstellung eines möglichst homogenen Kunststoffkörpers dient auch die Maßnahme, daß das Anschlußteil mit wenigstens einer Öffnung für den Austritt von Luft während des Einfüllens des flüssigen Kunststoffes versehen wird.

Die für einen nach dem Unterdruckverfahren arbeitenden Schreibkopf notwendige Ausstattung jedes Mikrokanals mit einem Erregerelement wird gemäß einer vorteilhaften Weiterbildung der Erfindung dadurch erzielt, daß an dem Anschlußteil unterhalb jeder Bohrung ein röhrenförmiges Erregerelement angebracht wird, dessen lichte Weite an den Durchmesser der Formnadeln angepaßt ist. Das Erregerelement wird also während des Einfüllvorgangs mit eingegossen. Als besonders vorteilhaft ist in diesem Zusammenhang anzusehen, daß die elektrischen Anschlüsse des Erregerelements auf das Anschlußteil geführt werden. Dieses ist vorzugsweise als Anschlußplatte ausgebildet.

Die Überwachung der Position der Formnadel und deren Einfahren in die Sollposition wird vorzugsweise dadurch ermöglicht, daß unterhalb der Folie eine Matrix aus Fotoempfängern angeordnet wird und daß die Spitzen der Formnadeln auf die Matrix abgebildet werden. Durch Einsatz optischer Linsensysteme kann dabei eine optimale Anpassung an das Auflösungsvermögen der Matrix erfolgen. Eine verhältnismäßig einfache Umsetzung der Abtastwerte in entsprechende Positionierbewegungen wird dadurch erzielt, daß als Positionierwerkzeug ein mikroprozessorgesteuerter Mikromanipulator verwendet wird. Als Mikromanipulator ist dabei eine nach dem Prinzip eines einarmigen Roboters arbeitende Greifeinrichtung mit mehreren Freiheitsgraden der Bewegung aufzufassen.

Die nach dem Einfahren der Formnadeln in ihre Sollposition notwendige Fixierung der Formnadelspitzen in dieser Lage wird auf einfachste Weise dadurch erreicht, daß die Formnadelspitzen in ihrer Sollposition durch die Folie hindurchgestoßen werden. Denkbar wäre aber auch, daß die Formnadelspitzen durch Thermokleben mit der Folie unverrückbar verbunden werden.

Die Erfindung wird im folgenden anhand eines schematisch dargestellten Ausführungsbeispiels erläutert.

Eine Gießform 1 wird neben weiteren nicht dargestellten Gießformen in einer Halteplatte 2 gehalten; die Halteplatte 2 wird im Zuge eines Fertigungstaktes entlang einer Fotodiodenmatrix 3 und einer dieser vorgeschalteten - nur schematisch angedeuteten - Optik 4 vorbeigeführt. Die Gießform ist in ihren unteren Bereich mit einer transparenten einseitig beschichteten Kleberolie 5 abgeschlossen, wobei die Arretierung der Klebefolie 5 mittels eines ortsfesten Montageringes 6 erfolgt. Die Gießform 1 ist in ihrem oberen Bereich dit einer Anschlußplatte 7 abgedeckt, die neben Öffnungen 8 zur Aufnahme von formnadeln 9 auch zwei weitere Öffnungen 10, 11 aufweist, die dem späteren Eingießen flüssigen Kunststoffs bzw. dem Entweichen von Luft aus der Gießform 1 während des Eingießens des Kunststoffes dienen. Unterhalb der Bohrungen 8 sind jeweils rohrförmige Erregerelemente 12 gehalten, deren elektrische Anschlüsse 12a, 12b auf die Anschlußplatte 7 geführt sind. Infolge der Verringerung des Durchmessers in ihrem vorderen Bereich trifft die Formnadel 9 bei ihrer Einführung durch die Bohrung 8 mit Sicherheit den Innenbereich der Erregerhülse 12 und leitet damit eine Zentrierung derselben ein.

Die Zuführung der Formnadeln 9 erolgt mittels eines nur schematisch angedeuteten Mikromanipulators 13, der unter dem Steuereinfluß einer Steuereinrichtung 14 steht. Die Steuereinrichtung 14 - die einen Mikroprozessor enthält - wird über die Abtastwerte der Fotodiodenmatrix 3 zur Abgabe von Steuergrößen für den Mikromanipulator 13 veranlaßt. Nach Positionierung der Formnadel 9 in ihre Sollposition wird die Formnadel 9 in Richtung ihrer Längsachse in die Klebefolie 5 hineingestoßen und auf diese Weise in ihr arretiert. Anschließend kann das Einfüllen eines Kunstharzes durch die Öffnung 10 erfolgen wobei der Innenraum der Gießform 1 vorher mit Glasperlen 15 als Füllstoff beschickt worden ist.

Nach dem Auffüllen der Gießform 1 wird die Halteplatte 2 einen Schritt weitergetaktet, so daß die nächste noch leere Gießform in die dargestellte Bearbeitungsposition eingefahren wird.

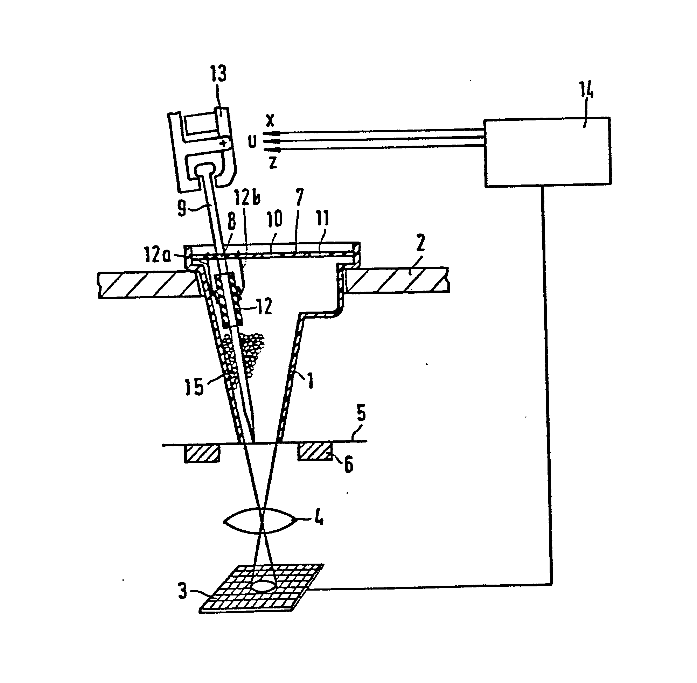

## Patentansprüche

1. Verfahren zum Gießen eines Kunststoffkorpers eines Schreibkopfes für einen Tintenschreiber mit Mikrokanälen, die an einander gegenüberliegenden Begrenzungsflachen des Kunststoffkörpers derart austreten, daß die Austrittsöffnungen in einer ersten Begrenzungsfläche einen geringeren Durchmesser und geringeren Abstand voneinander als in der zweiten Begrenzungsfläche aufweisen, mittels einer Gießform (1), die an einer offenen Stirnfläche mit einem im Raster der Austrittsöffnungen angeordnete Bohrungen (8) aufweisenden und eine Gießöffnung (10) enthaltenden Anschlußteil (7) zur Bildung der zweiten Begrenzungsfläche abgedeckt wird, wobei durch die Bohrungen (8) des Anschlußteils (7) in die Gießform Formnadeln (9) definiert eingebracht werden und anschließend flüssiger Kunststoff durch die Gießöffnung (10) in die Gießform (1) gegossen wird, dadurch gekennzeichnet, daß eine Gießform (1) verwendet wird, die eine weitere offene Stirnfläche zur Bildung der ersten Begrenzungsfläche aufweist, und die weitere Stirnfläche mit einer durchsichtigen Folie (5) abgedeckt wird, daß die Formnadeln (9) mittels eines Positionierwerkzeuges (13) durch die Bohrungen (8) in dem Anschlußteil (7) auf die Folie (5) abgesenkt werden, daß die Position der Formnadelspitzen optisch abgetastet wird und die Abtastwerte in einer Auswerte- und Steuereinrichtung (14) zu die Formnadelspitzen jeweils in ihre Sollposition führenden Verfahrbewegungen des Positionierwerkzeuges (13) umgesetzt werden und daß die Formnadelspitzen in der Sollposition an der Folie (5) arretiert werden.

2. Verfahren nach Anspruch 1, dadurch gekennzeichnet, daß die Gießform (1) als verlorene Gießform verwendet wird.

3. Verfahren nach Anspruch 1 oder 2, dadurch gekennzeichnet, daß an dem Anschlußteil (7) unterhalb jeder Bohrung (8) ein röhrenförmiges Erregerelement (12) angebracht wird, dessen lichte Weite an den Durchmesser der Formnadeln (9) angepaßt ist.

4. Verfahren nach einem der Ansprüche 1 bis 3, dadurch gekennzeichnet, daß unterhalb der Folie (5) eine Matrix (3) aus Fotoempfängern angeordnet wird und daß die Spitzen der Formnadeln (9) auf die Matrix (3) angebildet werden.

5. Verfahren nach einem der Ansprüche 1 bis 4, dadurch gekennzeichnet, daß als Positionierwerkzeug (13) ein mikroprozessorgesteuerter Mikromanipulator verwendet wird.

6. Verfahren nach einem der Ansprüche 1 bis 5, dadurch gekennzeichnet, daß die Spitzen der Formnadeln (9) in ihrer Sollposition durch die Folie (5) hindurchgestoßen werden.

7. Verfahren nach einem der Ansprüche 1 bis 6, dadurch gekennzeichnet, daß ein Anschlußteil (7) verwendet wird, das mit wenigstens einer Öffnung (11) für den Austritt von Luft während des Einfüllens des flüssigen Kunststoffes versehen ist.

## Claims

1. A method of moulding a plastics body of a recording head for an ink recorder having microchannels which emerge on mutually opposite boundary surfaces of the plastics body in such manner that the outlet openings have a smaller diameter and a smaller distance from one another in one boundary surface than in the other boundary surface, using a casting mould (1) which at an open end face is covered with a connecting member (7) which has bores (8) arranged in the raster of the outlet openings, has a pouring opening (10) and serves to form the second boundary surface, where through the bores (8) of the connecting member (7), shaped needles (9) are inserted into the casting mould in a predetermined manner and liquid synthetic resin is subsequently poured through the pouring opening (10) into the casting mould (1), characterised in that a casting mould (1) is used which has a further open end face for the formation of the first boundary surface and the further end face is covered with a transparent film (5); that the shaped needles (9) are lowered through the bores (8) in the connecting member (7) on to the film (5) by means of a positioning tool (13); that the position of the points of the shaped needles is optically scanned and in an analysing and control device (14) the scanned values are converted into displacing motions of the positioning tool (13) which respectively guide the points of the shaped needles into their theoretical positions; and that in the theoretical position the points of the shaped needles are stopped at the film (5).

2. A method as claimed in Claim 1, characterised in that the casting mould (1) is used as a lost casting mould.

3. A method as claimed in Claim 1 or Claim 2, characterised in that a tubular energising element (12), the internal width of which corresponds to the diameter of the shaped needles (9), is fixed to the connecting element (7) beneath each bore (8).

4. A method as claimed in one of Claims 1 to 3, characterised in that below the film (5), there is arranged a matrix (3) of photo-receivers; and that the points of the shaped needles (9) are reproduced on the matrix (3).

5. A method as claimed in one of Claims 1 to 4, characterised in that a micro-manipulator, controlled by a micro-processor, is used as positioning tool (13).

6. A method as claimed in one of Claims 1 to 5, characterised in that the points of the shaped needles (9) in their theoretical positions are pushed through the film (5).

7. A method as claimed in one of Claims 1 to 6, characterised in that a connecting member (7) is used which is provided with at least one opening (11) for the escape of air during the filling operation with the liquid synthetic resin.

## Revendications

1. Procédé de moulage d'un corps en matière plastique d'une tête d'écriture d'une imprimante à encre ayant des microcanaux, qui débouchent au niveau de surfaces opposées de limitation du corps en matière plastique de manière à ce que les ouvertures de sortie aient un diamètre plus petit et soient à une distance les unes des autres plus petite dans une première surface de limitation que dans la seconde surface de limitation, au moyen d'un moule (1) dont une surface frontale ouverte est recouverte, pour former la seconde surface de démarcation, d'une pièce de raccordement (7), présentant des perçages (8) disposés suivant le réseau des ouvertures de sortie et comportant une ouverture de coulée (10), des aiguilles de moule (9) étant introduites, de manière définie, dans le moule par les perçages (8) de la pièce de raccordement (7) et de la matière plastique liquide étant versée par l'ouverture de coulée (10) dans le moule (1), caractérisé en ce qu'il consiste à utiliser un moule (1) qui présente une autre surface frontale ouverte pour former la première surface de limitation et à recouvrir l'autre surface frontale d'une feuille (5) transparente, à abaisser les aiguilles de moule (9) sur la feuille (5) au moyen d'un outil de mise en position (13) en les faisant passer par les perçages (8) de la pièce de raccordement (7), à détecter optiquement la position des pointes des aiguilles de moule et à convertir les valeurs détectées, dans un dispositif d'exploitation et de commande (14), en des mouvements de déplacement de l'outil de mise en position (13) amenant les pointes des aiguilles de moule en les positions respectives qu'elles doivent prendre et à bloquer les pointes des aiguilles de moule sur la feuille (5) en la position qu'elles doivent prendre.

2. Procédé suivant la revendication 1, caractérisé en ce qu'il consiste à utiliser comme moule (1) un moule perdu.

3. Procédé suivant la revendication 1 ou 2, caractérisé en ce que, sur la pièce de raccordement (7), est fixé, en-dessous de chaque perçage (8), un élément d'excitation (12) tubulaire,dont le diamètre intérieur est adapté au diamètre des aiguilles de moule (9).

4. Procédé suivant l'une des revendications 1 à 3, caractérisé en ce qu'en-dessous de la feuille (5) est disposée une matrice (3) de récepteurs photoélectriques et en ce que les pointes des aiguilles de moule (9) sont reproduites sur la matrice (3).

5. Procédé suivant l'une des revendications 1 à 4, caractérisé en ce qu'il consiste à utiliser, comme outil de mise en position (13), un micromanipulateur commandé par un microprocesseur.

6. Procédé suivant l'une des revendications 1 à 5, caractérisé en ce que les pointes des aiguilles de moule (9) traversent la feuille (5), dans la position dans laquelle elles doivent se trouver.

7. Procédé suivant l'une des revendications 1 à 6, caractérisé en ce qu'il consiste à utiliser une pièce de raccordement (7), qui est munie d'au moins une ouverture (11) pour la sortie de l'air pendant le remplissage par de la matière plastique liquide.